# EUROPÄISCHE PATENTSCHRIFT

(11) **EP 1 361 492 B1**
(45) Veröffentlichungstag und Bekanntmachung des Hinweises auf die Patenterteilung: **15.12.2004**
(21) Anmeldenummer: 03009487.4
(22) Anmeldetag: 26.04.2003
(51) Int. Cl.: G05D 23/19, G05D 7/06

(54) **Anordnung zum Verstellen eines Ventils**
Device for adjusting a valve
Dispositif d'ajustement d'une soupape

(30) Priorität: 10.05.2002 DE 10220682
(43) Veröffentlichungstag der Anmeldung: 12.11.2003
(73) Patentinhaber: Möhlenhoff, Andreas, 38229 Salzgitter (DE)
(72) Erfinder: Seelmann, Christian, 31174 Schellerten (DE)
(74) Vertreter: Döring, Roger, Dipl.-Ing.

(56) Entgegenhaltungen:
- DE-A- 3 140 472
- DE-A- 4 030 383
- DE-A- 19 910 750
- GB-A- 1 319 164

## Beschreibung

Die Erfindung bezieht sich auf eine Anordnung zum Verstellen eines Ventils, das einen unter der Wirkung einer Rückstellfeder stehenden Stößel aufweist, bei welcher in einem am Ventil anzubringenden Gehäuse ein temperaturabhängiger Dehnkörper mit einem Arbeitskolben angeordnet ist, bei welcher am Dehnkörper ein mit einer Spannungsquelle verbindbarer elektrischer Widerstand angebracht ist und bei welcher in Montageposition des Gehäuses der Stößel des Ventils durch axiale Bewegung des Arbeitskolbens verstellbar ist (DE 199 10 750 A1).

Eine derartige Anordnung wird beispielsweise in der Heizungs- und Lüftungstechnik eingesetzt. Sie kann grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Durchflußmenge eines durch ein entsprechendes Rohrsystem strömenden bzw. fließenden Mediums verändert werden kann. Ein solches Medium ist beispielsweise Wasser oder Luft.

Bei der durch die eingangs erwähnte DE 199 10 750 A1 bekannten Anordnung werden der Arbeitskolben eines Dehnkörpers und dadurch auch der Stößel eines Ventils durch die Wirkung von elektrischem Strom bewegt. Dazu ist an dem temperaturabhängigen Dehnkörper ein elektrischer Widerstand als Heizelement angebracht. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt.

Der Stößel des in Ruhestellung beispielsweise geschlossenen Ventils wird dadurch entlastet und durch eine Rückstellfeder in Richtung "Öffnung des Ventils" bewegt. Um einen guten Wärmeübergang vom Widerstand zum Dehnstoffelement zu erreichen, können beide Teile durch Federkraft oder wärmeleitfähigen Kleber miteinander verbunden werden. In beiden Fällen können schon kleinste Verunreinigungen zu einer erheblichen Verschlechterung des Wärmeübergangs führen.

Der Erfindung liegt die Aufgabe zugrunde, die eingangs geschilderte Anordnung so zu verbessern, daß ein gleichbleibend guter Wärmeübergang vom Widerstand zum Dehnstoffkörper sichergestellt ist.

Diese Aufgabe wird gemäß der Erfindung dadurch gelöst,
- daß zwischen dem Widerstand und dem Dehnkörper eine flache, gut wärmeleitende Zwischenlage aus elektrisch isolierendem Material angebracht ist und
- daß in Montageposition sowohl der Widerstand als auch der Dehnkörper mit Druck an der Zwischenlage anliegen.

Die aus Isoliermaterial bestehende Zwischenlage wird in Montageposition sowohl an den Dehnkörper als auch an den Widerstand angepreßt. Da sie gut wärmeleitend ist, wird die vom Widerstand gegebenenfalls erzeugte Wärme mit stets gleichbleibendem Wärmeübergang auf den Dehnkörper übertragen. Eventuell vorhandene kleinere Verschmutzungen können sich nicht nachteilig auswirken, da die Zwischenlage ihre Eigenschaften als vorgefertigtes Element auch dann beibehält. Gleichzeitig trennt die Zwischenlage den Widerstand und den Dehnkörper potentialmäßig, da sie trotz guter Wärmeleitung insgesamt aus elektrisch isolierendem Material besteht.

Ein Ausführungsbeispiel des Erfindungsgegenstandes ist in den Zeichnungen dargestellt

Es zeigen:
Fig. 1 und 2 in schematischer Darstellung zwei Ansichten einer Anordnung nach der Erfindung mit prinzipiellem Aufbau im Schnitt.
Fig. 3 den Dehnkörper der Anordnung mit zugehörigem Widerstand in vergrößerter Darstellung.
Fig. 4 einen Schnitt durch Fig. 3 längs der Linie IV - IV.

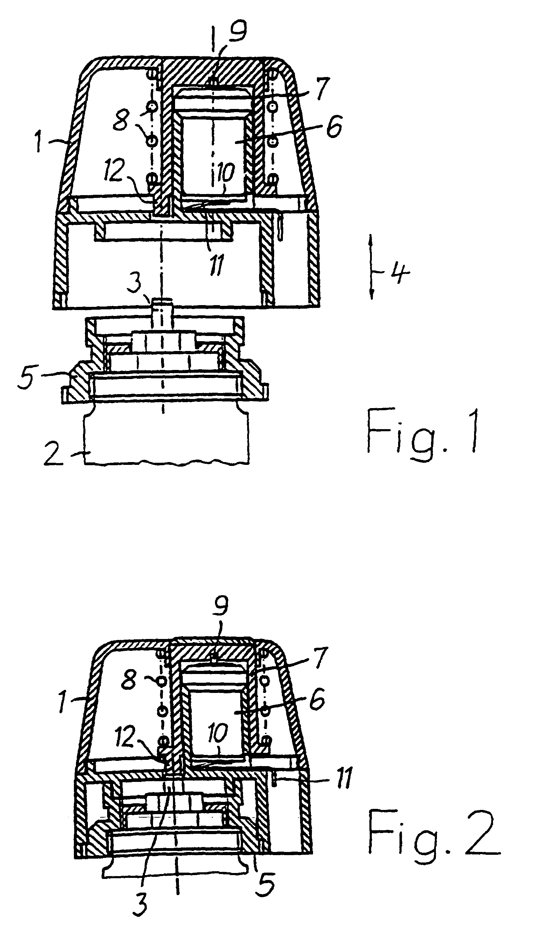

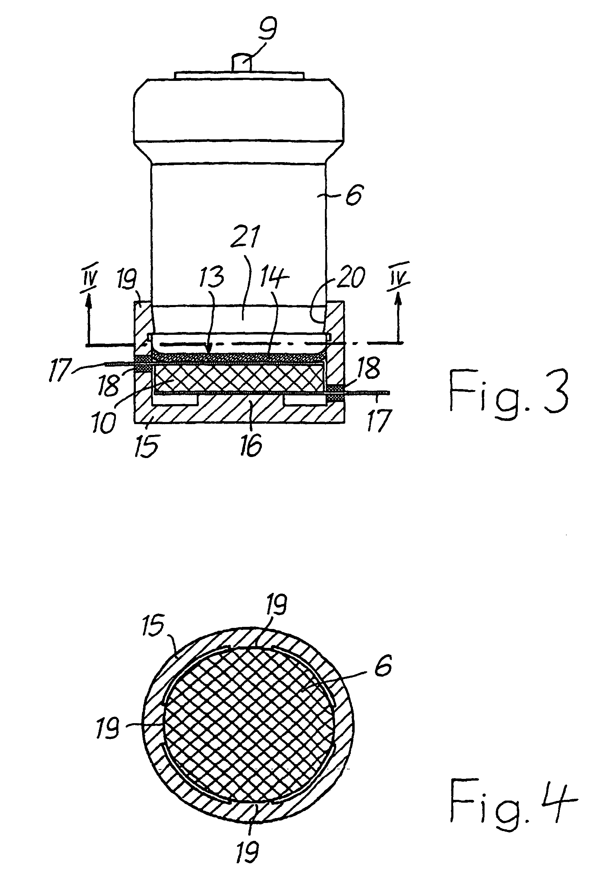

In den Fig. 1 und 2 ist eine Anordnung zum Verstellen eines Ventils in einer bestimmten Ausführungsform gezeigt. Sie soll aber trotzdem nur zur allgemeinen Erläuterung des prinzipiellen Aufbaus derartiger Anordnungen dienen. Von Bedeutung im vorliegenden Fall sind nur der Zusammenbau von Dehnkörper und elektrischem Widerstand. Dieser Zusammenbau ist beispielhaft in den Fig. 3 und 4 wiedergegeben.

Die Anordnung zum Verstellen eines Ventils weist ein aus einem stabilen Kunststoff bestehendes Gehäuse 1 auf, das auf ein nur schematisch angedeutetes Ventil 2 aufgesetzt werden kann. Das Ventil 2 hat einen Stößel 3, der unter der Wirkung einer der Einfachheit halber nicht mit dargestellten Rückstellfeder steht und in Richtung des Doppelpfeiles 4 zwischen einer Offenstellung und einer Schließstellung verstellbar ist. Der Stutzen des Ventils 2 ist beispielsweise mit einem Gewinde ausgerüstet, auf welches ein Halter 5 aufgeschraubt werden kann. Der beispielsweise aus Kunststoff bestehende Halter 5 dient zur Festlegung des Gehäuses 1 der Anordnung am Ventil 2.

In dem Gehäuse 1 sind ein temperaturabhängiger Dehnkörper 6, ein topfartiges Stellglied 7 und eine Druckfeder 8 angeordnet. Der Dehnkörper 6 hat einen in seiner Achsrichtung verstellbaren Arbeitskolben 9. Am Dehnkörper 6 ist außerdem ein als Heizelement dienender elektrischer Widerstand 10 angebracht, der beispielsweise über einen Kontakt 11 an eine Spannungsquelle anschließbar ist. Bei der in den Fig. 1 und 2 dargestellten Anordnung sind die in der gleichen Richtung verlaufenden Achsen von Stößel 3 und Arbeitskolben 9 seitlich gegeneinander versetzt. Bei dieser Ausführungsform der Anordnung liegt der Stößel 3 in Montageposition (Fig. 2) mit seiner Stirnfläche an einem Stift 12 an, der zu dem Stellglied 7 gehört. Die Wirkungsweise einer solchen Anordnung ist beispielsweise in der DE 197 03 321 C2 und in der eingangs erwähnten DE 199 10 750 A1 beschrieben.

Der Dehnkörper 6 besteht in bevorzugter Ausführungsform aus einem hermetisch dichten metallischen Topf, in dem ein sein Volumen temperaturabhängig änderndes Material angeordnet ist. In dieses Material ragt unter Beibehaltung des hermetisch dichten Verschlusses der Arbeitskolben 9 hinein. Der Widerstand 10 ist in bevorzugter Ausführungsform ein flacher Zylinder, so wie es in Fig. 3 dargestellt ist. Er ist mit Vorteil als Widerstand mit positivem Temperaturkoeffizienten (PTC) ausgebildet. Solche, aus keramischem Material bestehenden Widerstände verhindern automatisch eine Überhitzung, da sie beim Erreichen einer gegebenen hohen Temperatur abschalten.

In Fig. 3 sind von einer Anordnung nach den Fig. 1 und 2 nur der Dehnkörper 6 und der Widerstand 10 in gegenseitiger Zuordnung vergrößert gezeigt:

Der Dehnkörper 6 ist in bevorzugter Ausführungsform i.w. zylindrisch ausgeführt. Er hat dann einen etwa kreisrunden Boden 13 mit einer planen Außenfläche, die als Anlagefläche für den Widerstand 10 vorgesehen ist. Der Widerstand 10 selbst ist vorzugsweise als flacher Zylinder mit mindestens einer planen Stirnfläche ausgeführt, die zur Anlage am Dehnkörper 6 dienen soll.

Bei der Anordnung nach der Erfindung ist zwischen Dehnkörper 6 und Widerstand 10 eine flache Zwischenlage 14 aus elektrisch isolierendem Material angeordnet, die gut wärmeleitend ist. Der Widerstand 10 wird in Montageposition von einer Kappe 15 aus Isoliermaterial gegen die Zwischenlage 14 gedrückt, die dadurch ihrerseits gegen den Dehnkörper 6 gedrückt wird. Dazu kann die Kappe 15 in ihrem mittleren Bereich einen Vorsprung 16 aufweisen, der in Montageposition am Widerstand 10 anliegt. Die Kappe 15 ist in Montageposition mittels federnd einrastender Elemente am Dehnkörper 6 festgelegt. Sie besteht aus einem temperaturbeständigen Isoliermaterial, das seine für die Druckerzeugung und zur Einhaltung der Rastfunktion benötigte Elastizität bei Temperaturen von 120 °C und höher beibehält. Ein geeignetes Material ist beispielsweise Polyphenylensulfid (PPS).

Der Widerstand 10 kann auf beiden Stirnseiten mit Kontaktstreifen 17 aus elektrisch gut leitendem Material, wie beispielsweise Kupfer, ausgerüstet sein, die zum Anschluß an eine Spannungsquelle aus der Kappe 15 herausgeführt sind. Dazu hat die Kappe 15 entsprechende Löcher, in denen Dichtmaterial 18 zum dichten Verschließen der Kappe 15 angebracht ist. Bei dieser Ausführungsform liegen der Vorsprung 16 der Kappe 15 und die Zwischenlage 14 auch an den Kontaktstreifen 17 an.

Die Zwischenlage 14 ist gut wärmeleitend. Ihr Isoliermaterial ist dazu beispielsweise mit Partikeln gefüllt, die elektrisch nicht leiten. Derartige Partikel bestehen beispielsweise aus Aluminiumoxid. Die Zwischenlage 14 weist vorzugsweise einen mechanisch stabilen Träger auf, der von einem Material mit Dichtungseigenschaft umgeben ist. Sowohl im Träger als auch im umgebenden Material sind die erwähnten Partikel angebracht. In bevorzugter Ausführungsform besteht die Zwischenlage aus einer mit Silikon beschichteten, glasfaserverstärkten Trägerfolie. Die Trägerfolie besteht vorzugsweise aus einem Glasgewebe.

Zum Zusammenbau der Anordnung nach Fig. 3 wird zunächst der Widerstand 10 in die Kappe 15 so eingesetzt, daß seine Kontaktstreifen 17 seitwärts herausragen. In den Löchern der Kappe 15 wird dann das Dichtmaterial 18 angebracht, beispielsweise durch Spritzen. Danach wird auf den Widerstand 10 die Zwischenlage 14 gelegt. Die so vorbereitete Anordnung wird dann auf den Dehnkörper 6 aufgeschoben und mit demselben verrastet. Dazu hat die Kappe 15 beispielsweise vier Beine 19 mit Vorsprüngen 20, die in eine korrespondierende, umlaufende Vertiefung 21 des Dehnkörpers 10 eingreifen.

In dieser, aus Fig. 3 hervorgehenden Montageposition drückt der Vorsprung 16 gegen den Widerstand 10. Dehnkörper 6 und Widerstand 10 sind dann über die zusammengedrückte Zwischenlage 14 auf Dauer gut wärmeleitend miteinander verbunden. Der Widerstand 10 ist darüberhinaus einschließlich seiner Kontaktstreifen 17 feuchtigkeitsdicht in der Kappe 15 angeordnet, da das Dichtungsmaterial der Zwischenlage 14 alle möglicherweise vorhandenen Spalte abdichtet. Die isolierende Zwischenlage 14 trennt außerdem Widerstand 10 und Dehnkörper 6 potentialmäßig, so daß in keinem Fall eine elektrische Spannung am Dehnkörper 6 anliegen kann.

## Patentansprüche

1. Anordnung zum Verstellen eines Ventils, das einen unter der Wirkung einer Rückstellfeder stehenden Stößel aufweist, bei welcher in einem am Ventil anzubringenden Gehäuse ein temperaturabhängiger Dehnkörper mit einem Arbeitskolben angeordnet ist, bei welcher am Dehnkörper ein mit einer Spannungsquelle verbindbarer elektrischer Widerstand angebracht ist und bei welcher in Montageposition des Gehäuses der Stößel des Ventils durch axiale Bewegung des Arbeitskolbens verstellbar ist, **dadurch gekennzeichnet,**
- **daß** zwischen dem Widerstand (10) und dem Dehnkörper (6) eine flache, gut wärmeleitende Zwischenlage (14) aus elektrisch isolierendem Material angebracht ist und
- **daß** in Montageposition sowohl der Widerstand (10) als auch der Dehnkörper (6) mit Druck an der Zwischenlage (14) anliegen.

2. Anordnung nach Anspruch 1, **dadurch gekennzeichnet, daß** im Material der Zwischenlage (14) elektrisch nicht leitende Partikel angeordnet sind.

3. Anordnung nach Anspruch 2, **dadurch gekennzeichnet, daß** die Partikel aus Aluminiumoxid bestehen.

4. Anordnung nach einem der Ansprüche 1 bis 3, **dadurch gekennzeichnet, daß** die Zwischenlage (14) einen mechanisch stabilen Träger aufweist, der von einem Material mit Dichtungseigenschaft umgeben ist.

5. Anordnung nach einem der Ansprüche 1 bis 4, **dadurch gekennzeichnet, daß** die Zwischenlage (14) aus einer mit Silikon beschichteten, glasfaserverstärkten Trägerfolie besteht.

6. Anordnung nach einem der Ansprüche 1 bis 5, **dadurch gekennzeichnet, daß** der Widerstand (10) und die Zwischenlage (14) von einer am Dehnkörper (6) verrastbaren Kappe (15) aus Isoliermaterial umgeben sind, die auf der dem Dehnkörper (6) abgewandten Seite mit Druck am Widerstand (10) anliegt.

7. Anordnung nach Anspruch 6, **dadurch gekennzeichnet, daß** der Widerstand (10) feuchtigkeitsdicht in der Kappe (15) angeordnet ist.

## Claims

1. Arrangement to adjust a valve having a tappet acting under the influence of a reset spring wherein a housing which is to be fixed to the valve contains a temperature-dependent expanding body with a working piston, wherein an electrical resistor connectable to a voltage source is attached to the expan ding body, and wherein the valve tappet is adjustable on axial movement of the working piston when the housing is in the installed position, **characterized in that**
- there is a flat, good heat-conducting intermediate layer (14) consisting of electrically insulating material between the resistor (10) and the expanding body (6), and
- both the resistor (10) and the expanding body (6) are pressed against the intermediate layer (14) when in installed position.

2. Arrangement according to claim 1, **characterized in that** electrically nonconductive particles are contained within the material of the intermediate layer (14).

3. Arrangement according to claim 2, **characterized in that** the particles consist of aluminum oxide.

4. Arrangement according to one of claims 1-3, **characterized in that** the intermediate layer (14) has a mechanically stable substrate that is surrounded by a sealing material.

5. Arrangement according to one of claims 1-4, **characterized in that** the intermediate layer (14) consists of a fiberglass-reinforced substrate film coated with silicone.

6. Arrangement according to one of claims 1-5, **characterized in that** the resistor (10) and the intermediate layer (14) are surrounded by a cap (15) of insulating material that locks with the expanding body (6), and the side of said cap facing away from the expanding body (6) presses against the resistor (10).

7. Arrangement according to claim 6, **characterized in that** the resistor (10) is sealed against moisture within the cap (15).

## Revendications

1. Un mécanisme de déplacement d'une soupape qui comporte un poussoir soumis à l'effet d'un ressort de rappel, ledit mécanisme comportant un corps de dilatation dépendant de la température et un piston moteur disposés dans un boîtier monté sur la soupape, ledit mécanisme comportant une résistance électrique, disposée sur le corps de dilatation et pouvant être reliée à une source de tension, et ledit mécanisme pouvant se déplacer, en position de montage du boîtier de poussoir de la soupape, par l'intermédiaire d'un déplacement axial du piston moteur, l'invention étant **caractérisée en ce que**
- entre la résistance (10) et le corps de dilatation (6) se situe une couche intermédiaire (14) plate à bonne conductivité de chaleur et constituée d'un matériau isolant électrique et
- en position de montage, aussi bien la résistance (10) que le corps de dilatation (6) s'appuient contre la couche intermédiaire (14) avec une certaine pression.

2. Un mécanisme conforme à la revendication 1, et **caractérisé en ce que** dans le matériau de la couche intermédiaire (14) sont disposées des particules ne conduisant pas le courant électrique.

3. Un mécanisme conforme à la revendication 2, **et caractérise en ce que** les particules sont en oxyde d'alum inium.

4. Un mécanisme conforme à une des revendications 1 à 3, et **caractérisé en ce que** la couche intermédiaire (14) comporte un support mécaniquement robuste qui est entouré d'un matériau ayant des propriétés d'étanchéité.

5. Un mécanisme conforme à une des revendications 1 à 4, **et caractérisé en ce que** la couche intermédiaire (14) est constituée d'une feuille recouverte d'une couche de silicone et renforcée de fibres de verre.

6. Un mécanisme conforme à une des revendications 1 à 5, **et caractérisé en ce que** la résistance (10) et la couche intermédiaire (14) sont entourées d'un capuchon (15) en matériau isolant pouvant s'enclencher sur le corps de dilatation (6) et qui s'appuie sur la face opposée au corps de dilatation (6) en faisant pression sur la résistance (10).

7. Un mécanisme conforme à la revendication 6, **et caractérisé en ce que** la résistance (10) est disposée dans le capuchon (15) entièrement étanche à l'humidité.
